Europäisches Patentamt

European Patent Office

Office européen des brevets

(11) Publication number: **0 471 403 A1**

## EUROPEAN PATENT APPLICATION

(21) Application number: 91201983.3

(22) Date of filing: 31.07.91

(51) Int. Cl.5: **F16C 33/46**

(30) Priority: **14.08.90 NL 9001823**

(43) Date of publication of application:
**19.02.92 Bulletin 92/08**

(84) Designated Contracting States:
**DE ES FR GB IT NL SE**

(71) Applicant: SKF Industrial Trading &
Development Co, B.V.
Kelvinbaan 16
NL-3439 MT Nieuwegein(NL)

(72) Inventor: van Brakel, Ronald Johannes
Kardinaal Alfrinklaan 43
Driebergen-Rijsenburg(NL)

(74) Representative: Merkelbach, B.
SKF Engineering & Research Centre B.V.
P.O. Box 2350
NL-3430 DT Nieuwegein(NL)

(54) Cage for a roller bearing.

(57) Grease lubricated roller bearings often show too high running temperature. It has been found that the cage causes this high temperature due to contact between the roller (4) and cage pocket side-walls (10'). This contact (scraping) causes less or even insufficient lubrication between cage and roller and apparently high temperature. This situation can be avoided i.e. sufficient grease available between cage pocket and rollers, when the cage pocket bars (9) are designed such that their side-walls (10) have no contact with the rollers, preferably have the same conformity in radial and axial direction as the rollers. The only contact between a roller (4) and cage bar (9) is then the cage-lip or protrusion (13), which prevents the roller from falling out of the cage pocket. In fact "scraping" of grease from the rollers by the side-walls during running of the bearing is now prevented.

fig-3

The invention concerns a cage for application in a roller bearing containing essentially cylindrical or barrel-shaped rollers, including at least one ring and a number of spacers which are placed at equal distance from one another and are connected to the ring, perpendicular to the plane of the ring and project from it, which spacers are always placed between two adjacent rollers to keep them separated, and are each bounded by two lateral planes oriented toward the rollers, running obliquely inward toward one another and extending from an outer rim to an inner rim, which rims form the ribs of dihedral angles. A similar cage is generally known.

Roller bearings of the aforementioned type which are equipped with a similar cage are used in many applications and perform generally well.

However, experience has shown that when a similar bearing is in operation, its temperature may rise to unacceptable levels, e.g., 160° C notwithstanding proper lubrication of the bearing with a lubricant in the prescribed manner.

According to the invention it has been shown that a high operating temperature is caused by the fact that the areas where the rollers come into contact with the cage are insufficiently lubricated, so that great friction is generated in those areas, leading to an abnormal increase in temperature.

In particular, it appeared that poor lubrication of said areas is due to the fact that the aforementioned inside rims at the spacers of the cage form rather sharp edges so that the dihedral angles whose ribs are constituted by those rims measure barely more than 90° and that each of those sharp edges may be in linear contact with the circumferential plane of the roller opposite it, whereby the layer of lubricant on this circumferential plane is scraped off the rotating roller, resulting in an insufficient amount of lubricant between de roller and the plane of the spacer.

According to the invention, a solution has been found to this problem which consists in ensuring that in the cage according to the invention the lateral planes of the spacers run obliquely toward one another in such manner that the shortest distance between a lateral plane and the opposite part of the circumferential plane with the largest diameter of the roller is closest to the outer rim, so that the inner rim constitutes the rib of a dihedral angle which encloses a pronounced obtuse angle.

In a cage executed in this manner the inner rims of the spacers cannot come into contact with the circumferential planes of the rollers, so that the layers of lubricant on those will be maintained, and excellent lubrication will be guaranteed between each roller and the opposite spacer planes. It has been shown that during the operation of a roller bearing with a cage executed according to the invention, the temperature never exceeds 100° C.

Preferably, the angle between each lateral plane of the spacers and the tangent plane of the opposite roller in which the outer rim extends will measure between 15° and 30°.

The aforementioned lubrication is may be improved further by giving the lateral planes of the spacers a shape - in the axial and/or radial direction of the bearing - which corresponds essentially to the shape of the roller.

The invention is explained in detail with reference to the drawing in which:

Figure 1 shows an axial section of a bearing containing cages according to the invention,

Figure 2 shows a top view of one of the cages in Figure 1, and

Figure 3 shows a cross-section of two cage spacers or dividing walls with a roller in between, whereby the spacer to the left in the figure is a spacer of a known cage, and the spacer to the right in the figure is a spacer of a cage according to the invention.

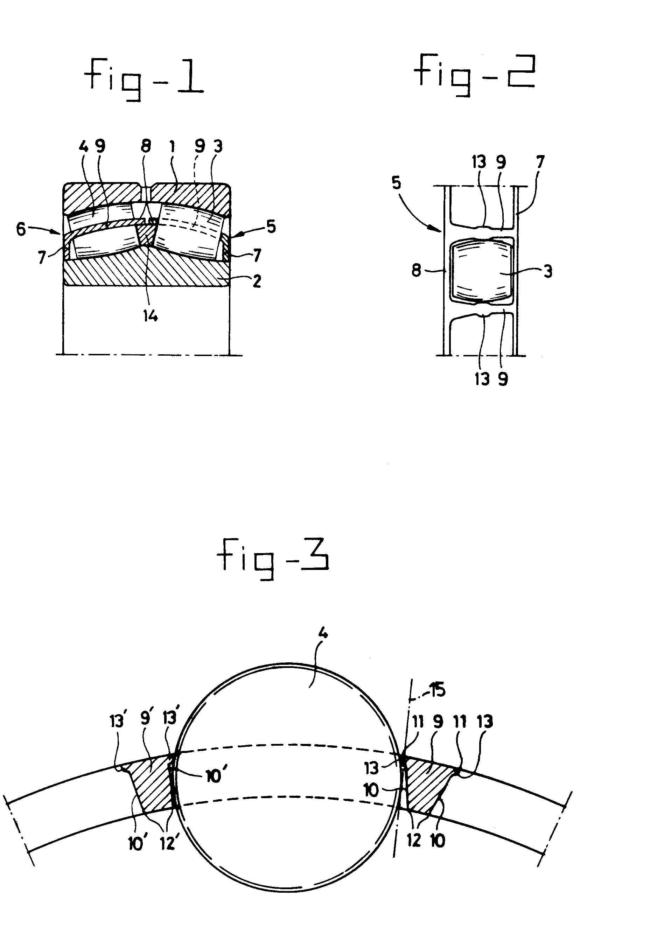

As shown in Figure 1, the roller bearing includes an outer race 1, an inner race 2, and two rows of rollers 3 and 4 located between the races. The rollers 3 and 4 are each barrel-shaped so that the roller bearing shown is a so-called spherical roller bearing. The rollers of each row 3, 4 are separated from one another by means of cages 5 and 6, respectively. Number 14 refers to a separation ring applied to the inner race 2.

Because the cages 5 and 6 are identical, only cage 6 is described in detail, with reference to Figure 2. Cage 6 includes an outer ring 7 and an inner ring 8, and a number of spacers 9, located at equal distance from one another and connected to the rings 7 and 8, so that the rings 7 and 8 and the spacers 9 define a number of openings each of which contains a roller 4.

As shown in Figure 3, each spacer 9 is bounded by two lateral walls 10 oriented toward the rollers 4, which walls run obliquely inward toward one another, whereby these lateral walls 10 extend from an outer rim 11 to an inner rim 12. The lateral walls 10 extend obliquely toward one another in such manner that the shortest distance between a lateral plane 10 and the opposite part of the circumferential plane with the largest diameter of the roller 4 occurs at the outer rim 11. The angle between a lateral wall 10 and the tangent plane 15 at the roller 4 in which the outer rim 11 extends, measures 15° to 30°.

For the sake of comparison, a spacer 9' of the known cage is drawn on the left side in Figure 3. It is clear that the lateral walls 10' of the spacer 9' run obliquely toward one another in such manner that the aforementioned shortest distance occurs at the inner rim 12' whereby, in addition, the inner rim 12' constitutes a sharp edge because the dihedral angle of which this rim 12' constitutes the rib, encloses an angle which is barely larger than a 90° angle.

The numbers 13 and 13' refer to small protrusions which are formed at the outer rims of the spacers 9 and 9', respectively, to prevent the rollers 4 from falling out of the cage during the assembly of the roller bearing.

## Claims

1. Cage for application in a roller bearing containing essentially cylindrical or barrel-shaped rollers, including at least one ring and a number of spacers which are placed at equal distance from one another and are connected to the ring, perpendicular to the plane of the ring and project from it, which spacers are always placed between two adjacent rollers to keep them separated, and are each bounded by two lateral planes oriented toward the rollers, running obliquely inward toward one another and extending from an outer rim to an inner rim, which rims form the ribs of dihedral angles, characterized by the fact that the lateral planes (10) of the spacers (9) run obliquely toward one another in such manner that the shortest distance between a lateral plane and the opposite part of the circumferential plane with the largest diameter of the roller (4) is closest to the outer rim (11), so that the inner rim (12) constitutes the rib of a dihedral angle which encloses a pronounced obtuse angle.

2. Cage according to Claim 1, characterized by the fact that the angle between each lateral plane (10) of the spacers (9) and the tangent plane (15) of the opposite roller (4) in which the outer rim (11) extends will measure between 15° and 30°.

3. Cage according to Claims 1 or 2, characterized by the fact that the lateral planes of the spacers have a shape - in the axial and/or radial direction of the bearing - which corresponds essentially to the shape of the roller (4).

# fig-1

# fig-2

# fig-3

European
Patent Office

Application Number

EUROPEAN SEARCH
REPORT

EP 91 20 1983

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 044 663   (BRODIN)<br>* Column 2, lines 18-46; figures 1,2 *<br>– – – | 1,3 | F 16 C 33/46 |
| Y | US-A-3 167 365   (HELMS)<br>* Column 3, lines 48-56; figure 3 *<br>– – – | 1-3 | |
| Y | WO-A-8 102 918   (THE TIMKEN CO.)<br>* Page 7, line 21 - pge 8, line 17; figure 5 *<br>– – – | 1-3 | |
| A | US-A-3 429 626   (TEUFEL)<br>* Claim 1 *<br>– – – | 1 | |
| A | US-A-4 797 015   (HIDANO et al.)<br>* Figures; column 3, lines 31-37 *<br>– – – | 1,3 | |
| A | FR-A-2 567 220   (S.K.F. GmbH)<br>* Figures 1,3; page 3, lines 5-36 *<br>– – – | 1,3 | |
| A | US-A-2 705 666   (GIBBONS)<br>– – – | | |
| A | US-A-4 288 129   (RYANEN)<br>– – – – – | | TECHNICAL FIELDS SEARCHED (Int. Cl.5)<br><br>F 16 C |

The present search report has been drawn up for all claims

| Place of search | Date of completion of search | Examiner |
|---|---|---|
| The Hague | 27 September 91 | GUTHMULLER J.A.H. |